Europäisches Patentamt

European Patent Office

Office européen des brevets

(19)

(11) EP 0 590 115 B1

(12) EUROPEAN PATENT SPECIFICATION

(45) Date of publication and mention
of the grant of the patent:
**11.06.1997 Bulletin 1997/24**

(21) Application number: **93906652.8**

(22) Date of filing: **23.03.1993**

(51) Int Cl.[6]: **C08F 4/02**

(86) International application number:
**PCT/FI93/00116**

(87) International publication number:
**WO 93/19100 (30.09.1993 Gazette 1993/24)**

(54) **A POLYMERIZATION CATALYST CARRIER PREPARED BY SPRAY CRYSTALLIZATION**

DURCH SPRÜHKRISTALLISATION HERGESTELLTER TRÄGER FÜR EINEN
POLYMERISATIONSKATALYSATOR

SUPPORT DE CATALYSEUR DE POLYMERISATION PREPARE PAR CRISTALLISATION PAR
ATOMISATION

(84) Designated Contracting States:
**DE FR GB IT SE**

(30) Priority: **24.03.1992 FI 921269**

(43) Date of publication of application:
**06.04.1994 Bulletin 1994/14**

(73) Proprietors:
• **NESTE OY**
**06101 Porvoo (FI)**
• **BOREALIS A/S**
**2800 Lyngby (DK)**

(72) Inventors:
• **KOSKINEN, Jukka**
**SF-02160 Espoo (FI)**
• **JOKINEN, Petri**
**SF-06100 Porvoo (FI)**

(74) Representative: **Woods, Geoffrey Corlett et al**
**J.A. KEMP & CO.**
**14 South Square**
**Gray's Inn**
**London WC1R 5LX (GB)**

(56) References cited:
**EP-A- 0 503 713          WO-A-87/07620**

• **Research Disclosure, June 1982, Abstract No.
21828, pages 202-203, A.R. BLYTHE et al.:
"Electrostatic spraying", see the whole Abstract.**

## Description

The invention relates to a method for preparing a particulate carrier for an olefin polymerization procatalyst which comprises a transition metal compound reacted upon a carrier, in which method:

(a) a heated melt of a complex compound is provided having the formula I

$$MgCl_2 \cdot nROH \cdot mED \qquad (I)$$

in which ROH depicts a lower ($C_{1-6}$) aliphatic alcohol, ED depicts an electron donor, n is 1 to 6 and m is 0 to 1,

(b) the provided heated melt is fed to a nozzle atomizing it,

(c) the melt to be atomized is sprayed from the nozzle into a chamber colder than the melt, where it is distributed in the form of atomized melt and then solidified to fine carrier particles and

(d) the fine carrier particles are recovered.

For the polymerization of olefins the Ziegler-Natta catalyst system is commonly used, which consists of a so-called procatalyst and a cocatalyst. The procatalyst is based on a compound of a transition metal belonging to any of the groups IVA-VIII (Hubbard) of the periodical table of the elements and the cocatalyst is based on an organometallic compound of a metal belonging to any of the groups IA-IIIA (Hubbard) of the periodical table of the elements.

Nowadays, the procatalysts typically comprise an inert carrier, on which the actual active catalyst component, that is, the transition metal compound or the mixture or complex formed by catalytical compounds is layered. The morphology, size and size distribution of the particles of the carrier influence significantly the properties of the polymer achieved by the catalyst. In fact, by an active catalyst a polymer can be produced, from which, thanks to its purity, no catalyst residues need to be removed.

The morphology and particle size of the carrier, on the other hand, affects the morphology of the polymer product itself, since it has been observed that the morphology of the catalyst is repeated in the structure of the polymer (the so-called replica phenomenon). If a flowable polymer product polymer is wanted having a useful morphology and a narrow particle size distribution, which is desirable in view of the aimed use of many processing processes, the properties of the carrier shall, because of the replica phenomenon, be made similar.

Nowadays, the Ziegler-Natta -type procatalysts typically comprise a magnesium-based carrier, such as a magnesium chloride treated with a transition metal compound like a titanium halide, such as titanium tetrachloride, and sometimes also with an electron donor compound. It is also known that the carrier can be brought in a preferable and equal-sized crystal form by letting it crystallize as a complex of any of its crystal solvents.

The patent family consisting of, among others, EP specification 65700 and US patent specification 4,421,674 and which claims priority from the Italian application IT 2,188,181 (810521) relates to a method for preparing a catalyst which is particularly active in the polymerization of gaseous ethylene.

In the process a titanium halide is brought to react with magnesium chloride catalyst carrier, which is in the form of microspheres, after which the reaction product particles are recovered by physical means and mixed with an organometallic cocatalyst compound.

Characteristic for this conventional method is that:

(a) a solution is provided which contains essentially magnesium dichloride dissolved in ethanol, the content of which is 100 to 300g of magnesium dichloride/l of solution, whereby the water-content of the solution does not exceed 5% by weight,

(b) a spray-drying of the solution is carried out by spraying it into an essentially non-aqueous flow of nitrogen gas, the purity of which is at least 99.9% and the inlet temperature of which flow is between 180 and 280°C, whereby the nitrogen and the solution flows are simultaneously controlled so that the outlet temperature of the gaseous mixture is between 130 and 210°C provided that the outlet temperature is at least 40°C lower than the inlet temperature and that the ethanol does not evaporate completely, whereby spheroidal magnesium dichloride particles are obtained,

(c) the magnesium dichloride particles are brought to react with a titanium halide, which is in vapor or liquid form and optionally diluted with an inert solvent to be evaporated,

(d) the reaction product particles are recovered by physical means when they contain 0.7 to 12% by weight of titanium bound to solid material and

(e) the reaction product particles mentioned are mixed with an organometallic compound, which is an alkylaluminium or an alkylaluminium halide.

This kind of spray-drying method patents are based on a fairly complete drying of ethanol ($C_2H_5OH$) from the carrier liquid after the atomization. Hereby, the carrier has commonly been dried at a temperature that is above 150°C, whereby a remarkable portion of the alcohol of the complex is evaporated. Typically, a carrier product is obtained in the spray-drying method, the alcohol concentration of which is between 12 and 25% by weight and anyway below 30% by weight.

One drawback of the spray-drying is that when the alcohol forms on the surface of the magnesium dihalide a site reacting with the transition metal compound, the low alcohol content of the carrier results in a weak activation with the transition metal compound, such as the titanium halide. A further essential drawback of the spray-drying is the poor morphology and the broad particle size distribution of the carrier obtained, which is caused by the breaking and collapsing of the particles during the process.

According to FI patent specification 80055 (Neste Oy) the above mentioned carrier complex formed by the carrier and the crystal solvent can be melted to clear liquid. When this kind of a liquid is conducted through a spray nozzle into a spraying chamber cooled by cold nitrogen gas it crystallizes into spheroidal small carrier particles, which are very fluid and loose. The process in practice takes place so that the $MgCl_2$ and $C_2H_5OH$ are melted at a temperature of 110 to 130°C to form a clear melt. Then the clear homogenized mixture is fed through an atomizing nozzle into a cooled spraying chamber. The atomizing gas used in the spraying is dry nitrogen, the temperature of which is about +130°C, and into the spraying chamber is as cooling medium conducted dry nitrogen, the temperature of which is of the order of about -20°C. The nozzle used is a gas-liquid-fluidizing nozzle or the like. Improvements to this so-called spray-crystallization method have been presented, among others, in WO-A-92 21705 and WO-A-93 11166.

The spray-crystallization method produces very flowable and loose particles. Furthermore, the carrier complex crystallizes without substantial evaporation of the crystal solvent. The amount of the evaporating crystal solvent is below 3% by weight of the amount fed into the chamber. When this kind of carrier is brought into contact with the titanium compounds, plenty of catalytically active complexes between the $MgCl_2$ and the titanium compound are formed on the surface of the carrier when the crystal solvent disappears. A drawback of this kind of a method is, however, that enough fine particles or particles of equal size are not formed. This may be due to the high viscosity and surface tension and/or the agglomeration of the droplets in the atomizing chamber.

From RD (Research Disclosure) 218028-A is known a method in which an electrostatic spraying is carried out in a closed system using at least one high voltage electrode to keep the droplets away from the walls of the atomizing chamber. Grounded needles are placed around the nozzles to discharge the charge of the droplets. A gas flow is also arranged around the nozzle to keep the droplets in the middle zone of the chamber.

The liquid to be sprayed is a solution or suspension that can be spray-dried to solid particles. Typical solutions are according to the publication the water or alcohol solutions of magnesium chloride. Typical suspensions are the hydrocarbon suspensions of titanium dichloride and the hydrocarbon suspensions of titanium tetrachloride on magnesium chloride particles. Additives can be added to the liquid to improve its conductivity.

By this kind of an electrostatic spray-drying technique solid titanium dichloride particles or magnesium chloride particles carrying titanium tetrachloride having a narrow particle size distribution and being especially suitable for gas phase polymerization can be obtained.

The above-mentioned electrostatic spray-drying has, however, drawbacks of its own. As is well known, the start droplets of the spray-drying are small in size and light. In the spray-drying chamber a rapid heating of the droplets and simultaneously a rapid evaporation upwards and outwards takes place, which draws the initial droplets into an uncontrolled turbulent motion, which results in both the agglomeration of the droplets and their attachment to the walls of the chamber.

Accordingly, the electrostatic spray-drying does not relate to the actual improvement of the droplet formation, but its main purpose is to prevent the sticking of the formed particles. As it was stated above that the spray-dried particles tend to break and collapse, it is clear, that the electric potential which decreases the surface tension sooner tends to contribute to the breaking and collapsing of the particles than to the forming of morphologically useful particles.

Moreover, large amounts of solvent or suspension liquid evaporates into the chamber space during the spray-drying, which may lead to a discharge of the electrical charge, which can result in a lowering of the atomizing effect and in an electrical breakdown causing an extra risk of explosion.

WO-A-87/07620 discloses a procedure for manufacturing a solid catalyst component for a catalyst useful in the polymerization of alpha-olefins, of the kind which comprises a solid carrier substance containing an organic or inorganic magnesium compound and treated with a titanium halide and optionally with an electron donor compound. The magnesium compound or the mixture of magnesium compound and electron donor compounds is sprayed in molten state into a chamber or volume which has been cooled to a temperature at which the catalyst component will solidify from the melt in the form of particles with generally spherical shape, without any substantial evaporation of solvents.

An aim of the invention is to provide a method for the preparation of a particulate carrier for an olefin polymerization catalyst, which method produces carrier with a suitable and even size and a suitable morphology. More specifically, an optimal atomizing technique of a liquid containing the carrier is strived for, in which the distribution of the droplets to a fog of controlled size is possible. Thus, a method is aimed at which produces small particles and particles of even size preventing simultaneously the agglomeration of the particles until the particles solidify to final carrier particles. One further aim of the invention is to provide a secure and reliable method for preparing useful carrier particles of the type mentioned.

These aims of the invention have now been achieved a new method for preparing an olefin polymerization catalyst carrier, which method is mainly characterized by what is said in the characterizing clause of claim 1. It has thus been realized that when melt of the carrier complex is fed from the nozzle into the chamber, wherein it is becoming atomized and solidifies, an electrical charge is simultaneously fed into the melt to be atomized or which has been atomized.

By feeding into the melt to be atomized an electrical charge high enough, the electrostatic forces grow so strong that they oppose the surface tension forces and cause a readier drop formation of the melt. By this technique the carrier melt can be divided into remarkably finer drops than by using normal centrifugal or gravitational force. In the method according to the invention also the agglomeration of the droplets is prevented, that is they do not attach to each other. Thus, the agglomeration of the particles and their intermediate forms can be prevented by feeding an electrical charge into the melt to be atomized or which has been atomized. When retaining the charge after the atomization the particles remain, thanks to the Coulomb forces detached from each other. They become charged and retain their charge according to their physical properties (resistivity, permeability) a certain time, during which the electrostatic forces influence their route.

The achievable charge of the particle is in practice no more than a half of the so-called Rayleigh limit value, i.e.

$$q = 4\pi \sqrt{\frac{\varepsilon 0 T d^3}{8}} \qquad (II)$$

in which

q = the charge of the particle
T = the surface tension
d = the diameter of the particle
$\varepsilon_0$ = the absolute permeability

These charged particles form around themselves an electric field which tends to keep the particles of similar charge apart from each other. The charge required for keeping the particles apart from each other is decisively dependent on the atomizing construction used. The size and rate distribution of the particles and the distribution of the charge within them influence on the final result.

A condition for the success of an electrostatic spray-crystallization is that the electrical conductivity of the carrier melt is within a suitable range, whereby if is possible to feed a charge of the size needed into the melt. Moreover, the permeability of the carrier melt must be within a suitable range when the temperature of the melt is sinking and the melt is crystallizing, allowing the melt particles to be sufficiently charged. The charge fed to the melt must not cause any electrical breakdown nor any extra risk of explosion when the charge is discharged, as is the case of spray-drying, where the evaporating solvent and the medium cause such risks.

In its broadest sense the method according to the present invention is a so-called spray-crystallization method, which has been modified by feeding an electrical charge into the melt to be atomized or has been atomized. By spray-crystallization method is hereby meant a method, in which the melt of the carrier complex is sprayed from a nozzle into a chamber, where it is distributed as an atomized melt and solidifies to form fine carrier particles. The spray-crystallization differs from the spray-drying in that the material to be sprayed is a melt of $MgCl_2 \cdot nEtOH$ and not a solution. A solution can be defined so that, when the temperature sinks, material crystallizes from it having a chemical composition, i.e. an element or molecular ratio, which is essentially different from that of the solution. In the case of a solution, the complex $MgCl_2 \cdot nEtOH$ cannot crystallize to form structures (a crystal lattice, in which n is greater than 6). In the present invention n is smaller than 6, whereby a complex is in question, which is melted and crystallized without evaporation of larger EtOH amounts.

An electrical charge is consequently fed to the melt to be atomized or that has been atomized. The voltage is of the order of 0.5 to 10kV, preferably about 1 to 5kV.

According to one preferred embodiment a charge is fed into the melt to be atomized or that has been atomized by an electrode arranged in connection with the nozzle. A suitable electrode used thereby is a current-bearing conductor, which is a straight or annular electric line arranged in the immediate vicinity of the nozzle orifice, preferably at a distance of about 5-10mm from it. Thereby, the charge is caused in the electrode by feeding a voltage of the size mentioned and preferably grounding the melt, for example, by grounding the conductive mouth piece of the nozzle. Also the chamber wall can preferably be grounded in the invention.

An electrostatic nozzle is operating so that an electrostatic charge is formed on the surface of the particles formed in the atomization. The electrostatic charge is a force reverse to the surface tension forces, due to which the outer energy needed for the drop formation decreases. Respectively, by using mechanical drop formation energy in the atomization of the electrically charged melt, the drop formation becomes easier and the size and size distribution decreases. The electric field strength needed for the abolition of the surface tension forces is $10^3$-$10^6$V/m, depending on the consistency of the melt. By an electrostatic spraying atomization a homogeneous fog is achieved, the particle size and distribution of which can be controlled.

As electrostatic nozzles conventional nozzle types, as above, or a special nozzle designed for this purpose can be used. Particularly, a so-called linear slot die can be thought of, in which the atomization takes place through a long slot. Typically, the capacity of this kind of a nozzle is insignificant, but it can be increased by adding the number of the nozzles. A long slot die can also be joined from its ends, whereby an annular nozzle is achieved. In this case the capacity of the nozzles can be increased by using several annular nozzles inside each other.

According to one preferred embodiment of the invention the melt to be atomized at the stage (c) is sprayed into the chamber by means of a nozzle, which consists of a fixed orifice, a melt pipe leading to the orifice, a pressure inert gas pipe leading to the orifice, and a high voltage line arranged in the vicinity of the orifice.

According to another preferred embodiment the melt to be atomized is sprayed at stage (c) by means of a revolving nozzle in connection with which a high voltage line of the type mentioned has been arranged. Although above straight or annular electric lines have been spoken of, it is clear that the invention relates to all kinds and shapes of lines and electrodes, by which the electrical charge mentioned is caused in the electrode.

When, at stage (a) a complex compound is achieved to be used in the method according to the invention, it is preferable to select a complex, in which the ROH according to the formula (I) means $C_2H_5OH$ and/or $CH_3OH$, preferably $CH_2H_5OH$. The n according to the formula (I) is preferably 2.0-5.0 and most preferably 3.0-4.0.

The complex is then melted and fed at stage (b) into a nozzle atomizing it, whereby the temperature of the melt preferably is +80 - +250 °C and most preferably +90 - +130 °C. The nozzle can be any kind of suitable atomizing nozzle, such as a pneumatic nozzle, an air jet, revolving nozzle, or an ultrasonic nozzle. According to one preferred embodiment a pneumatic nozzle or an air jet is used, which is a linear or a round slot die. According to another preferred embodiment a revolving nozzle is used, which is a pipe processed in the form of a circle (ring), into which round slots having the diameter of 0.5-1.0nm have been bored at suitable distances.

Usually, the melt to be atomized is fed into the upper part of an essentially vertical chamber, the temperature of which is between -10 to +50°C preferably -10 to +40°C. According to another embodiment different temperatures are maintained in the upper and lower parts of the chamber. Thereby, the temperature of the atomizing zone in the upper part of the chamber is preferably maintained between +10 to +100°C, preferably between +20 to +80°C, more preferably +20 to +40°C and the crystallizing zone in the lower part of the chamber is maintained at a lower temperature, preferably -30 to +40°C and preferably at a temperature of -20 to +40°C, more preferably +20 to +40°C.

The melt to be atomized can suitably be sprayed from a nozzle onto the chamber by means of a nitrogen flow, which in order to achieve an advantageous flow pattern circulates downwards along a spiral path in the chamber. The temperatures of the atomizing and crystallizing zones of the chamber can, if desired, be maintained by means of one or several inert gas flows, whereby the gas flow of the atomizing zone can simultaneously be the atomizing gas conducted into the nozzle or its vicinity and the gas of the crystallizing zone can be conducted into the chamber, either into the crystallizing zone or between the atomizing and crystallizing zones, by means of a pipe.

Finally, the fine carrier particles are recovered at stage (d), preferably from a funnel in the lower part of the vertical chamber.

The recovered fine carrier particles are then reacted with the transition metal compound, preferably $TiCl_4$, and optionally with an electron donor for preparing an olefin polymerization procatalyst. The olefin polymerization procatalyst is then used together with an organoaluminium-type cocatalyst for the polymerization of olefins.

The invention is described more closely in the following referring to the attached drawings, in which

figures 1a and 1b depict two types of nozzles suitable for carrying out the invention,
figure 2 depicts schematically equipment intended for the carrying out of the invention,
figure 3 depicts an electrostatic nozzle of one type used in the invention,
figure 4 depicts an electrostatic revolving-plate nozzle suitable for the invention,
figure 5 depicts a more concrete picture of equipment used in the invention.

The electrified airblast nozzle (Law) of the schematic diagram depicted by figure la consists of a nozzle body 1, a liquid dome 2, an air dome 3, an electrode 4 embedded in the air dome 3, and a high voltage feed 5 leading to the nozzle 1-4, a pressure gas feed 6 and a liquid feed 7.

The nozzle operates so that to the pipe 7 is fed melt carrier complex simultaneously as pressurized nitrogen or some other pure, inert gas is fed into the pipe 6 and high voltage direct-current is coupled to the high voltage line 5. The pressurized nitrogen and the complex melt coincide at the nozzle orifice, in the close vicinity of which there also is the embedded electrode 4 mentioned. The result is a fog consisting of electrically charged fine droplets.

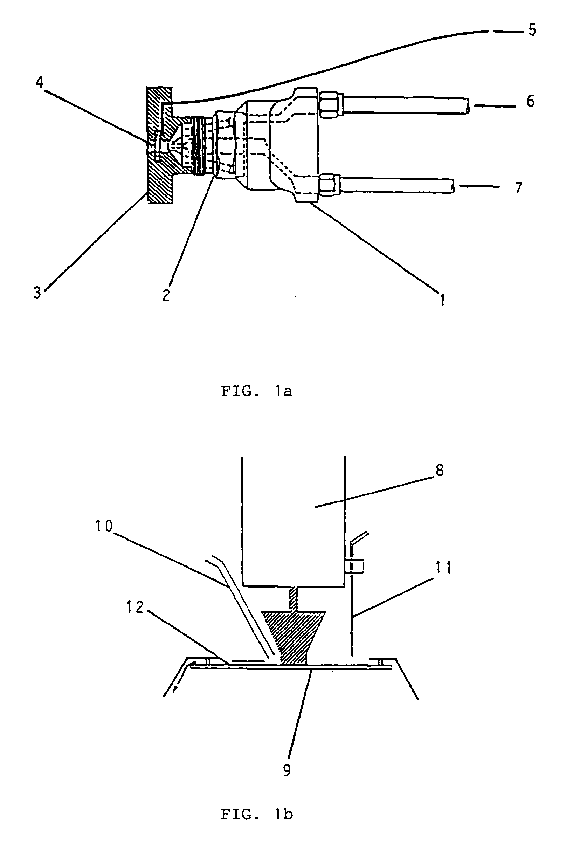

Figure 1b depicts a charged revolving-plate nozzle (Arnold and Pye), the main parts of which consist of a motor 8 causing the rotation, a revolving plate 9, a feed pipe 10 of the complex melt, an electrode 11 causing the electric charge and a conductive plate 12 arranged on the revolving plate.

This device operates so that the revolving plate 9, which is, for example, a Micron Herbi standard plate having a diameter of 7.5cm, the centre of which has been removed and replaced by the conductive plate, is brought to revolve simultaneously as a voltage is coupled between the revolving plate 9 and the electrode 11. Then complex melt is fed through pipe 10 to the revolving plate 9, where it contacts the conductive plate 12 and becomes charged. Simultaneously, the melt moves due to the centrifugal force towards the circumference of the revolving plate 9 and finally becomes atomized through a quide plate arranged in the chamber space in connection with the revolving plate. The manufacturers have suggested a voltage of about 30kV to be used in this device.

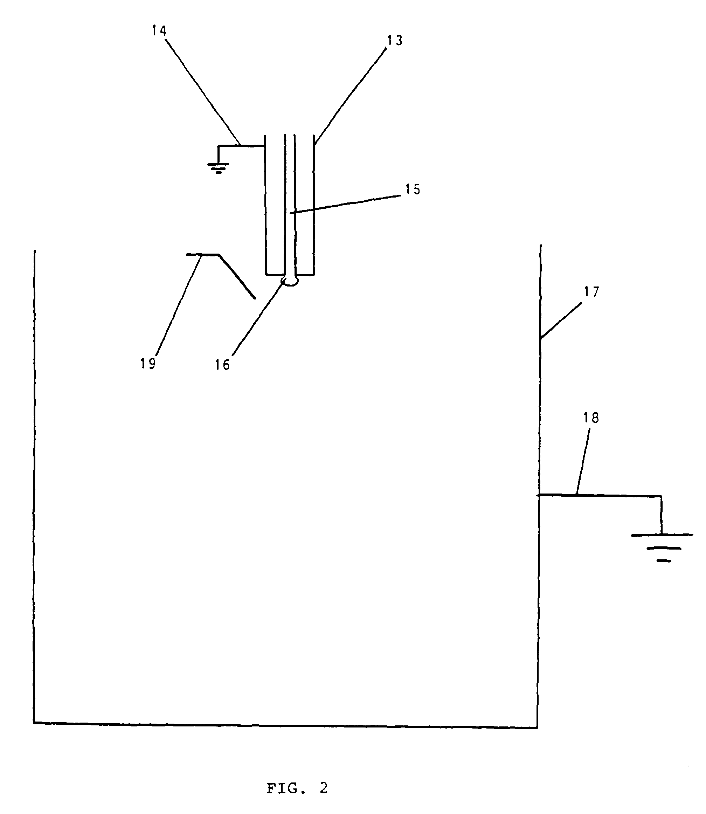

In figure 2 equipment used in the method according to the invention has been presented. The nozzle 13 is furnished with an oil heating and a grounding 14 as well as a channel 15 with openings 16 for spraying the complex melt into the chamber 17, which is grounded 18. Before the nozzle orifice an electrode 19 has been arranged, to which a tension of 4kV has been coupled.

The equipment operates so that to the grounded 14 nozzle 13 is fed complex melt and it is sprayed out through the nozzle orifice or orifices 16. Thanks to the electrode 19 in the vicinity of the nozzle orifice 16 the melt is charged just before it is atomized, whereby the charge facilitates the breaking of the melt into droplets and simultaneously keeps the droplets formed apart from each other. The fog droplets move downwards in the chamber 17 and solidify to solid carrier particles due to the low temperature in the chamber 17.

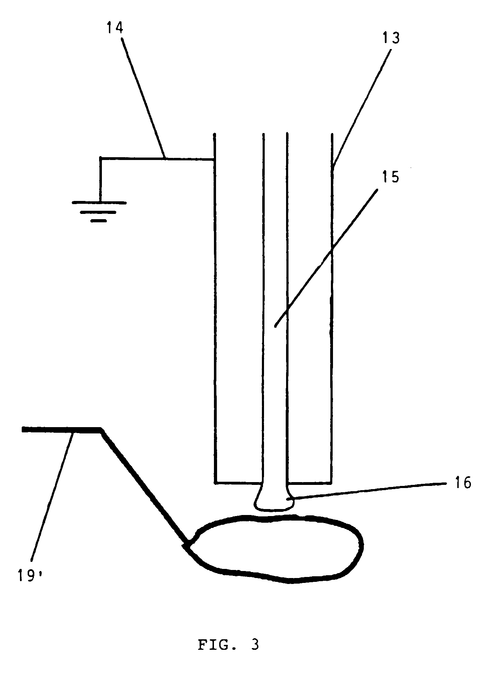

In figure 3 a slightly different electrostatic nozzle solution can be seen. The solution is otherwise the same as that presented in figure 2 except that a ring electrode 19' arranged in front of and around the nozzle orifice or orifices 16 is operating as the electrode. This kind of a ring electrode 19' is symmetrical with respect to the spraying axis of the complex melt and it can be assumed that it operates better than a usual bar electrode 19.

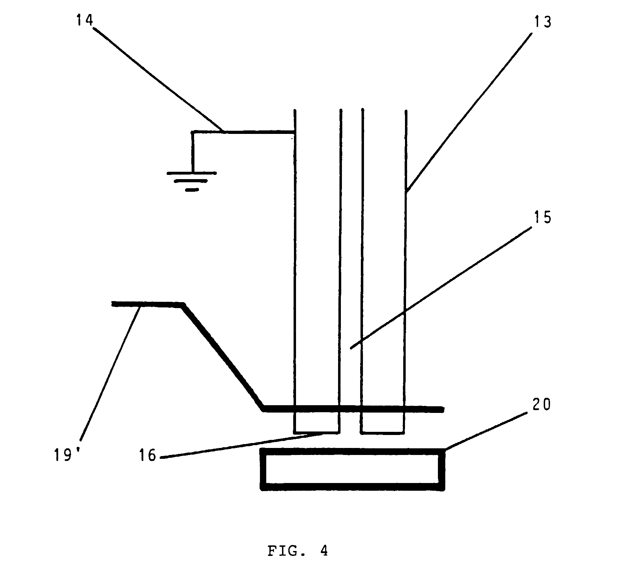

In figure 4 a revolving plate 20 has been arranged before the nozzle orifice 16 and simultaneously the ring electrode has been lifted to surround the nozzle body 13 so that it is no longer in the way of the revolving-plate nozzle 20. In this solution the atomization promoting effects of the rotating-plate nozzle 20 and the ring electrode 19' have been combined. The succeeding of the atomization, that is the fine spraying, is expressly the problem when melt material is sprayed. The problem is not as critical when more finely-flowing materials are sprayed.

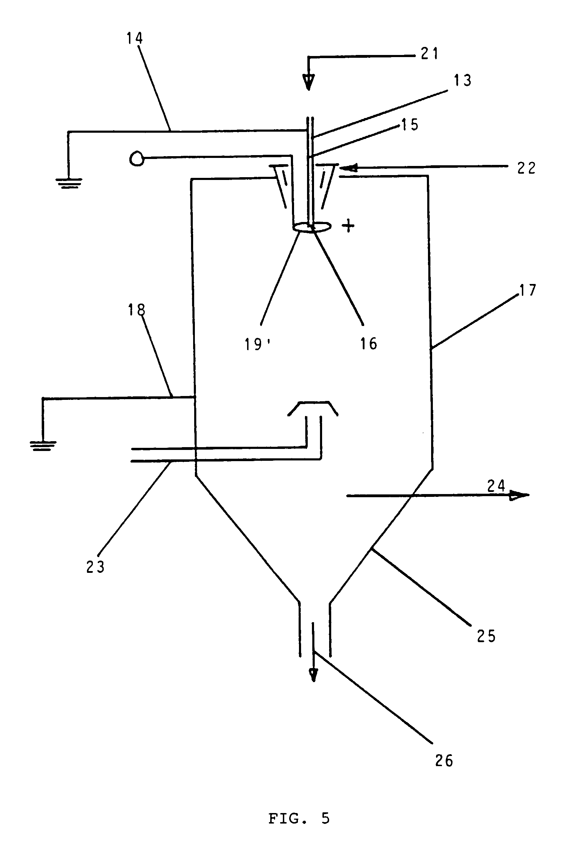

Figure 5 presents more accurately than figure 2 how the method according to the invention operates. In the method the carrier melt 21 is fed into the nozzle 13, in the duct 15 of which it reaches the nozzle orifice 16. Simultaneously, an inert gas is fed into the chamber through the nozzles 22 and 23, the function of which is to act as a protective and temperature controlling gas. The gas fed into the upper part 22 of the chamber is brought into a rotating movement, by means of which the bumpings of the particles against the walls is prevented.

The actual nozzle structure 13, 16 is electrically conductive and it is grounded 14. An electrical charge has been arranged into the melt by furnishing the nozzle 13, in close vicinity of its end 16, with a ring electrode 19', the voltage of which is about 0.5-10kV.

The melt is sprayed from the nozzle 13, 16 into the chamber 17, which is grounded 18. The melt is immediately distributed in the upper part of the chamber to atomized melt, which due to the gravitational force and the cooling gas moves to the lower part of the chamber. When the melt at the nozzle orifice is at the temperature of about +80 - +250 °C, the temperature can, according to one embodiment, be maintained at between -10 - +50 so that the temperature is higher in the upper part of the chamber than in its lower part.

The inert gas, preferably nitrogen 22, fed into the chamber moves downwards in the chamber 17 with the fog, preferably along a downwards leading spiral path until it is removed from the lower part 24 of the chamber.

The melt fog solidifies in the lower part of the chamber to form fine carrier particle material, which is recovered in a funnel 25 in the lower part of chamber 17 and is removed 26.

In the following some examples are presented, the only task of which is to illustrate the present invention.

Example 1

A $MgCl_2$ + 3.5 EtOH melt was fed with a pressure of 15 bars at a temperature of 125 °C into a pressure nozzle, the diameter of which was 0.6mm, the capacity being 30kg/h. The temperature in the spray-chamber was -10 °C and there prevailed a dry nitrogen atmosphere, figure 1. The nozzle and the walls of the spray-chamber had been grounded in the manner presented in figure 2. At a distance of 10mm from the nozzle a needle electrode coupled to a +4kV potential had been placed. The strength of the current was 120μA. The contamination of the electrode was prevented by nitrogen blasting. The voltage source used had an automatic protective reactance to prevent overload situations and break-downs.

By the electrostatic spraying according to the description an even melt fog was continuously achieved, in which the particles due to their charge kept efficiently apart from each other before the crystallization.

The charge of the crystallized particles was discharged through the grounded walls of the chambers and the end product was very fluid and loose. The agglomeration of the particles was very insignificant. The particle size was between 20-120μm, S.D. 50μm, and span 1.8μm. The chemical consistency of the carrier particles was $MgCl_2$ + 3.2 EtOH.

Example 2

The conditions were the same as in example 1, but as the electrode a construction according to figure 3 was used. The distance of the annular electrode was 6mm and the potential +3kV. The operation of the annular electrode construction was ideal and the fog became charged more evenly as in the case of example 1.

Example 3

The melt was fed into a revolving-plate nozzle according to figure 4 and thereby a ring according to figure 5 was used as the electrode, which ring had been placed 10mn above the plate. The radius of the ring electrode was 20mm longer than that of the revolving plate. The capacity of the melt feed was 30kg/h and the rotative velocity was 18,000rpm.

The tension of the electrode was +4kV and the current 90μA. The agglomeration of the particles was again insignificant and even, loose carrier powder was obtained as the product. The size of the particles was between 20 - 100μm, S.D. 40μm and span 1.6μm. The chemical consistency of the carrier was $MgCl_2$ + 3.2 EtOH.

**Claims**

1. A method for preparing a particulate carrier for an olefin polymerization procatalyst which comprises a transition metal compound reacted upon a carrier, in which method:

   (a) a heated melt of a complex compound is provided having the formula I

   $$MgCl_2 \cdot nROH \cdot mED \qquad (I)$$

   in which ROH depicts a lower ($C_{1-6}$) aliphatic alcohol, ED depicts an electron donor, n is 1 to 6 and m is 0 to 1,

   (b) the provided heated melt is fed into a nozzle atomizing it,

   (c) the heated melt to be atomized is sprayed from the nozzle into a chamber colder than the melt, where it is distributed in the form of an atomized melt and solidifies when cooling down to fine carrier particles and

   (d) the fine carrier particles are recovered, **characterized** in that into the melt to be atomized or has been atomized is fed an electrical charge by an electrode arranged in connection with the nozzle, the voltage of which is 0.5 to 10kV.

2. Method according to Claim 1, **characterized** in that as the electrode is used a conductor, which is a straight or annular electric line arranged in immediate vicinity of the nozzle orifice, preferably at a distance of 5 to 10mm from it.

3. Method according to Claim 1 or 2, **characterized** in that the charge is achieved in the electrode by feeding into it a voltage of 0.5 to 10kV and grounding the melt, for example by grounding an electrically conductive nozzle transferring the melt.

4. Method according to Claim 3, **characterized** in that also the wall of the chamber is grounded.

5. Method according to any of the preceding Claims, **characterized** in that at stage (c) the melt to be atomized is sprayed by means of a nozzle consisting of a solid orifice, a melt pipe leading into the orifice, a pressure inert gas pipe and a high voltage line arranged in the vicinity of the orifice.

6. Method according to any of the Claims 1-4, **characterized** in that at stage (c) the melt to be atomized is sprayed by means of a revolving nozzle, in connection with which a high voltage line has been arranged.

7. Method according to any of the preceding Claims, **characterized** in that at stage (a) a melt of a complex compound 2 is provided, the ROH of the formula (I) of which means $C_2H_5OH$ and/or $CH_3OH$, preferably $CH_2H_5OH$.

8. Method according to any of the preceding Claims, **characterized** in that at stage (a) a melt of a complex compound is provided, the n according to the formula (I) of which is 2.0 to 5.0, preferably 3.0 to 4.0.

9. Method according to any of the preceding Claims, **characterized** in that the melt provided is fed at stage (b) into a nozzle atomizing it at a temperature of +80 to +250 °C, preferably at the temperature of +90 to +130 °C.

10. Method according to any of the preceding Claims, **characterized** in that the provided melt is fed at stage (b) into a nozzle spraying it, which is a pneumatic nozzle, a pressurized or unpressurized hole nozzle, a revolving nozzle or an ultrasonic nozzle.

11. Method according to Claim 10, **characterized** in that the provided melt is fed at stage (b) into a pneumatic or pressurized nozzle atomizing it, which is a linear or round slot die.

12. Method according to any of the preceding Claims, **characterized** in that the melt to be atomized is sprayed at stage (c) from the nozzle into an upper zone of an essentially vertical chamber, the temperature of which is -10 to +50°C, preferably -10 to +40°C.

13. Method according to any of the preceding Claims, **characterized** in that the melt to be atomized is sprayed at stage (c) from the nozzle into a spray zone in the upper part of an essentially vertical chamber so that in the spray zone the temperature is +10 to +100°C, preferably +20 to +80°C.

14. Method according to Claim 13, **characterized** in that at stage (c) the atomized melt distributed into the spray zone is moved into a crystallization zone in the lower part of the chamber, where a lower temperature is maintained than in the spraying zone, preferably a temperature of -30 to +40°C, most preferably the temperature of -20 to +40°C.

15. Method according to any of the preceding Claims, **characterized** in that nitrogen is fed into the upper and middle part of the chamber, which preferably circulates downwards along a spiral path in the chamber.

16. Method according to any of the preceding Claims, **characterized** in that when the melt to be atomized is sprayed at stage (c) from the nozzle into the chamber, the temperatures of the atomizing and crystallizing zones are maintained by means of one or several inert gas flows.

17. Method according to Claim 16, **characterized** in that inert gas is conducted into the crystallizing zone or between the atomizing and the crystallizing zones.

18. Method according to any of the preceding Claims, **characterized** in that the fine carrier particles are recovered at stage (d) from a funnel in the lower part of the vertical chamber.

19. Method according to any of the preceding Claims, **characterized** in that the recovered fine carrier particles are reacted with a transition metal compound, preferably $TiCl_4$, and optionally with an electron donor for preparing an olefin polymerization procatalyst.

20. The use of an olefin procatalyst prepared by a method according to any of the preceding Claims together with an organoaluminum cocatalyst for the polymerization of olefins.

**Patentansprüche**

1. Verfahren zum Herstellen eines partikelförmigen Trägers für einen Olefin-Polymerisations-Prokatalysator, der eine Übergangsmetallverbindung umfaßt, der auf einen Träger einwirkt, mit den folgenden Verfahrensschritten:

(a) eine erhitzte Schmelze einer komplexen Verbindung wird bereit gestellt mit der Formel I

$$MgCl_2 \cdot nROH \cdot mED \qquad (I)$$

wobei ROH einen niederen ($C_{1-6}$) aliphatischen Alkohol bezeichnet, ED einen Elektronendonor, n = 1 bis 6 und m = 0 bis 1 ist;

(b) die bereitgestellte erhitzte Schmelze wird einer diese atomisierenden Düse zugeführt;

(c) die zu atomisierende Schmelze wird aus der Düse in eine Kammer eingesprüht, die kälter als die Schmelze ist, und in welcher sie in Gestalt einer atomisierten Schmelze verteilt wird und sich beim Abkühlen zu feinen Trägerpartikeln verfestigt; und

(d) die feinen Trägerpartikel werden wiedergewonnen, dadurch gekennzeichnet, daß in die zu atomisierende oder atomisierte Schmelze eine elektrische Ladung eingeführt wird durch eine Elektrode, die in Verbindung mit der Düse steht, und daß die Ladung 0,5 bis 10 kV beträgt.

2. Verfahren nach Anspruch 1, dadurch gekennzeichnet, daß die Elektrode eine Leiter ist, der gradlinig oder ringförmig ist und der in unmittelbarer Nähe der Düsenöffnung angeordnet ist, vorzugsweise in einem Abstand von 5 bis 10 mm.

3. Verfahren nach Anspruch 1 oder 2, dadurch gekennzeichnet, daß die Ladung in der Elektrode durch Anlegen einer Spannung von 0,5 bis 10 kV und durch Erden der Schmelze erzeugt wird, beispielsweise durch Erden einer elektrisch leitenden Düse, die die Schmelze überführt.

4. Verfahren nach Anspruch 3, dadurch gekennzeichnet, daß auch die Wand der Kammer geerdet ist.

5. Verfahren nach einem der vorausgegangenen Ansprüche, dadurch gekennzeichnet, daß die zu atomisierende Schmelze bei Schritt (c) mittels einer Düse versprüht wird, die aus einer festen Öffnung besteht, einer Schmelze-Leitung, die zur Düse führt, einer Inertgas-Druckleitung sowie einem im Bereich der Öffnung angeordneten Hochspannungsleiter.

**6.** Verfahren nach einem der Ansprüche 1 bis 4, dadurch gekennzeichnet, daß die zu atomisierende Schmelze bei Schritt (c) mittels einer umlaufenden Düse versprüht wird, an die ein Hochspannungsleiter angeschlossen ist.

**7.** Verfahren nach einem der vorausgegangenen Ansprüche, dadurch gekennzeichnet, daß eine Schmelze einer komplexen Verbindung 2 bei Schritt (a) vorgesehen wird, deren ROH der Formel (I) $C_2H_5OH$ und/oder $CH_3OH$ bedeutet, vorzugsweise $CH_2H_5OH$.

**8.** Verfahren nach einem der vorausgegangenen Ansprüche, dadurch gekennzeichnet, daß eine Schmelze einer komplexen Verbindung bei Stufe (a) vorgesehen wird, wobei n gemäß Formel (1) 2,0 bis 5,0 beträgt, vorzugsweise 3,0 bis 4,0.

**9.** Verfahren nach einem der vorausgegangenen Ansprüche, dadurch gekennzeichnet, daß die bereitgestellte Schmelze bei Schritt (b) einer sie atomisierenden Düse bei einer Temperatur von 80° bis 250°C, vorzugsweise 90° bis 130°C zugeführt wird.

**10.** Verfahren nach einem der vorausgegangenen Ansprüche, dadurch gekennzeichnet, daß die bereitgestellte Schmelze bei Schritt (b) einer sie versprühenden Düse zugeführt wird, die eine pneumatische Düse ist, oder einer Düse, deren Bohrung unter Druck steht, oder eine Düse deren Bohrung nicht unter Druck steht, oder eine umlaufende Düse oder eine Ultraschalldüse.

**11.** Verfahren nach Anspruch 10, dadurch gekennzeichnet, daß die bereitgestellte Schmelze bei Schritt (b) einer sie atomisierenden pneumatischen oder unter Druck stehenden Düse zugeführt wird, die eine lineare oder Rundschlitzdüse ist.

**12.** Verfahren nach einem der vorausgegangenen Ansprüche, dadurch gekennzeichnet, daß die zu atomisierende Schmelze bei Schritt (c) aus der Düse in eine obere Zone einer im wesentlichen vertikalen Kammer eingesprüht wird, deren Temperatur zwischen -10° und +50°C liegt, vorzugsweise zwischen 10° und 40°C.

**13.** Verfahren nach einem der vorausgegangenen Ansprüche, dadurch gekennzeichnet, daß die zu atomisierende Schmelze bei Schritt (c) aus der Düse in eine Sprühzone im oberen Teil einer im wesentlichen vertikalen Kammer eingesprüht wird und daß in der Sprühzone die Temperatur 10° bis 100°C, vorzugsweise 20° bis 80°C beträgt.

**14.** Verfahren nach Anspruch 13, dadurch gekennzeichnet, daß die atomisierte, in die Sprühzone verteilte Schmelze bei Schritt (c) in eine Kristallisationszone im unteren Teil der Kammer bewegt wird, wo eine niedrigere Temperatur als in der Sprühzone herrscht, vorzugsweise eine Temperatur von -30° bis +40°C, am besten von -20° bis + 40°C.

**15.** Verfahren nach einem der vorausgegangenen Ansprüche, dadurch gekennzeichnet, daß dem oberen und mittleren Teil der Kammer Stickstoff zugeführt wird, der vorzugsweise entlang eines Spiralweges in der Kammer nach unten strömt.

**16.** Verfahren nach einem der vorausgegangenen Ansprüche, dadurch gekennzeichnet, daß dann, wenn zu atomisierende Schmelze bei Schritt (c) aus der Düse in die Kammer versprüht wird, die Temperaturen der atomisierenden und der kristallisierenden Zone mittels eines oder mehrerer Inertgasströme eingestellt werden.

**17.** Verfahren nach Anspruch 16, dadurch gekennzeichnet, daß in die kristallisierende Zone oder zwischen die atomisierende und die kristallisierende Zone Inertgas eingeleitet wird.

**18.** Verfahren nach einem der vorausgegangenen Ansprüche, dadurch gekennzeichnet, daß die feinen Trägerpartikel bei Schritt (d) aus einem Trichter im unteren Teil der vertikalen Kammer abgenommen werden.

**19.** Verfahren nach einem der vorausgegangenen Ansprüche, dadurch gekennzeichnet, daß die wiedergewonnenen feinen Trägerpartikel mit einer Übergangsmetallverbindung zur Reaktion gebracht werden, vorzugsweise mit $TiCl_4$, und wahlweise mit einem Elektronendonor zum Erzeugen eines Olefin-Polymerisations-Prokatalysators.

**20.** Anwendung eines Olefin-Prokatalysators, hergestellt mittels eines Verfahrens gemäß einem der vorausgegangenen Ansprüche zusammen mit einem Organoaluminium-Cokatalysator zur Polymersiation von Olefinen.

## Revendications

**1.** Procédé de préparation d'un support en particules pour un procatalyseur de polymérisation d'oléfine qui comprend un composé de métal de transition qui a réagi sur un support, procédé dans lequel

(a) un produit de fusion chauffé d'un composé complexe est fourni ayant pour formule (I)

$$MgCl2*nROH*mED \qquad (I)$$

dans laquelle ROH représente un alcool aliphatique inférieur (C1-6), ED représente un donneur d'électrons et n'a une valeur de 1 à 6 et m de 0 à 1

(b) le produit de fusion fourni est introduit dans une buse qui l'atomise

(c) le produit de fusion devant être atomisé, est pulvérisé depuis la buse vers une chambre plus froide que le produit de fusion où il est distribué sous la forme d'un produit de fusion atomisé et se solidifie lors du refroidissementnt, en fines particules de support et

(d) les fines particules de support sont récupérées,

caractérisé en ce que, dans le produit de fusion qui doit être atomisé ou qui a été atomisé, une charge électrique a été introduite par une électrode disposée en connection avec la buse dont le voltage est de 0,5-10 kV.

2. Procédé selon la revendication 1, caractérisé en ce qu'une électrode est utilisée comme un conducteur, qui est une ligne électrique linéaire ou circulaire disposée au voisinage immédiat de l'orifice de la buse, de préférence à une distance de 5-10 mm de lui.

3. Procédé selon la revendication 1 ou la revendication 2, caracterisé en ce que la charge est réalisée dans l'électrode en y introduisant un voltage de 0,5-10 kV et en reliant à la masse le produit de fusion, par exemple, une buse électriquement conductrice transferrant le produit de fusion.

4. Procédé selon la revendication 3, caracterisé en ce qu'aussi la paroi de la chambre est reliée à la masse.

5. Procédé selon l'une quelconque des revendications mentionnées précédemment, caractérisé par le fait qu'à l'étape (c) le produit de fusion qui doit être atomisé, est pulvérisé au moyen d'une buse consistant en un orifice solide et un conduit de produit de fusion conduisant à l'orifice, un conduit de gaz inerte sous pression et une ligne à haute tension disposée au voisinage de l'orifice.

6. Procédé selon une quelconque des revendications 1 à 4, caracterisé par le fait qu'à l'étape (c), le produit de fusion qui doit être atomisé est pulvérisé au moyen d'une buse rotative, en connection avec laquelle on a disposé une ligne à haute tension.

7. Procédé selon l'une quelconque des revendications précédentes, caractérisé par le fait qu'à l'étape (a), un produit de fusion d'un composé complexe 2 est fourni, dont le ROH de la formule (I) signifie C2H5OH et/ou CH3OH, de préférence, C2H5OH.

8. Procédé selon l'une quelconque des revendications précédentes, caractérisé en ce qu'à l'étape (a), un produit de fusion d'un composé complexe est fourni, dont le n selon la formule (I) est de 2,0-5,0, de préférence, 3,0-4,0.

9. Procédé selon l'une quelconque des revendications précédentes caractérisé en ce que le produit de fusion est alimenté dans une buse qui l'atomise, à la température de +80 à 250°C, de préférence à la température de +90 à 130°C.

10. Procédé selon l'une quelconque des revendications précédentes caractérisé par le fait que le produit de fusion fourni est introduit à l'étape (b), dans une buse qui le pulvérise, qui est une buse pneumatique, une buse dont l'orifice est pressurisé ou non, une buse rotative ou une buse ultrasonique.

11. Procédé selon la revendication 10, caractérisé en ce que le produit de fusion fourni est introduit à l'étape (b) dans une buse pneumatique ou pressurisée qui l'atomise, qui est une matrice à fente linéaire ou circulaire.

12. Procédé selon l'une quelconque des revendications précédentes caractérisé en ce que le produit de fusion qui doit être atomisé est pulvérisé à l'étape (c) depuis la buse vers une zone supérieure d'une chambre essentiellement verticale dont la température va de -10 - +50°C de préférence, de -10 - +40°C.

13. Procédé selon l'une quelconque des revendications précédentes caractérisé en ce que le produit de fusion qui doit être atomisé, est pulvérisé à l'étape (c) depuis la buse vers une zone d'atomisation à la partie supérieure d'une chambre essentiellement verticale de telle sorte que dans la zone d'atomisation, la température va d'environ +10 à +100°C, de préférence, de +20 à +80°C.

14. Procédé selon la revendication 13, caractérisé en ce qu'à l'étape (c), le produit de fusion atomisé distribué à l'intérieur de la zone d'atomisation, est déplacé vers une zone de cristallisation à la partie inférieure de la chambre, où une température est maintenue plus basse que dans la zone d'atomisation, de préférence une température allant de -20 - +40°C.

15. Procédé selon l'une quelconque des revendications précédentes caractérisé en ce que de l'azote est introduit dans la partie supérieure et dans la partie médiane de la chambre, qui circule de préférence vers le bas, le long d'un chemin en spirale dans la chambre.

**16.** Procédé selon l'une quelconque des revendications précédentes caractérisé en ce que le produit de fusion qui doit être atomisé est pulvérisé à l'étape (c) depuis la buse dans la chambre, les températures des zones d'atomisation et de cristallisation sont maintenues au moyen d'un ou plusieurs flux de gaz inerte.

**17.** Procédé selon la revendication 16, caractérisé par le fait que le gaz inerte est amené dans la zone de cristallisation ou entre les zones d'atomisation et de cristallisation.

**18.** Procédé selon l'une quelconque des revendications précédentes, caractérisé en ce que les fines particules de support sont récupérées à l'étape (d) à partir d'un entonnoir disposé dans la partie inférieure de la chambre verticale.

**19.** Procédé selon l'une quelconque des revendications précédentes caractérisé en ce que les fines particules de support récupérées sont mises à réagir avec un dérivé de métal de transition, de préférence du Cl4Ti, et, éventuellement, avec un donneur d'électrons pour préparer un procatalyseur de polymérisation d'oléfine.

**20.** Utilisation d'un procatalyseur d'oléfine, préparé par un procédé selon l'une quelconque des revendications précédentes, conjointement avec un cocatalyseur en organoaluminium pour la polymérisation d'oléfines.

FIG. 1a

FIG. 1b

FIG. 2

FIG. 3

FIG. 4

FIG. 5